# EUROPEAN PATENT APPLICATION

(11) **EP 4 741 978 A1**
(43) Date of publication of application: **13.05.2026**
(21) Application number: 24838731.8
(22) Date of filing: 05.07.2024
(51) Int. Cl.: G05D 1/43

(54) **INFORMATION COLLECTION MODULE AND AUTONOMOUS MOBILE MACHINE**

(30) Priority: 07.07.2023 CN 202310833697
(71) Applicant: Positec Power Tools (Suzhou) Co., Ltd., Suzhou, Jiangsu 215123 (CN)
(72) Inventor: XU, Chunpeng, Suzhou, Jiangsu 215123 (CN); DU, Jiang, Suzhou, Jiangsu 215123 (CN); LI, Xinghong, Suzhou, Jiangsu 215123 (CN); LI, Wei, Suzhou, Jiangsu 215123 (CN); WAN, Yanling, Suzhou, Jiangsu 215123 (CN)
(74) Representative: Kilburn & Strode LLP
(86) International application number: PCT/CN2024/103940
(87) International publication number: WO 2025/011478

(57) **Abstract**

The present application relates to an information acquisition module and an autonomous mobile robot, the autonomous mobile robot comprises a body and an information acquisition module, the information acquisition module is connected to the body, and the information acquisition module comprises: a first information acquisition apparatus having at least one collection window, the first information acquisition apparatus is configured to collect at least environmental data of the autonomous mobile robot in a traveling direction through the at least one collection window; and, a second information acquisition apparatus, the second information acquisition apparatus is configured to collect position data of the autonomous mobile robot during traveling. In the autonomous mobile robot of the present application, at least two information acquisition apparatus are mounted in a same module structure, the structure is connected to the body as a whole, thereby facilitating production in a production stage, reducing whole machine installation steps, having strong versatility, and allowing independent external parameter calibration apart from the body, reducing calibration times when installed on the body, while facilitating later maintenance and improving work efficiency.

## Description

### CROSS-REFERENCE TO RELATED APPLICATIONS

The present application claims the priority of a Chinese patent application filed on July 7, 2023, with application number CN202310833697.X, the entire content of which is incorporated herein by reference.

### TECHNICAL FIELD

The present application relates to the field of equipment technology, and specifically relates to an information acquisition module and an autonomous mobile robot.

### BACKGROUND

An autonomous mobile robot is able to travel on the ground and perform a corresponding task. Taking a lawn mower as an example, a lawn mower is used to trim and maintain a lawn, and a different type of lawn mower can be selected for a different terrain environment. For example, for a terrain with a large area and a high trimming requirement, a riding mower is usually used, which is more convenient to operate and has higher efficiency. An existing autonomous mobile robot is installed with a various type of information acquisition apparatus for acquiring relevant data during traveling.

### SUMMARY

In view of the above technical problems, the present application provides an autonomous mobile robot, in which multiple information acquisition apparatus are installed in a same structure, and the structure is then connected to a body as a whole, thereby facilitating production in a production stage, reducing whole machine installation steps, having strong versatility, and allowing independent external parameter calibration apart from the body, reducing calibration times when installed on the body, while facilitating later maintenance and improving work efficiency.

To solve the above technical problems, the present application provides an autonomous mobile robot, the autonomous mobile robot comprises a body and an information acquisition module, the information acquisition module is connected to the body, and the information acquisition module comprises:
a first information acquisition apparatus, having at least one collection window, the first information acquisition apparatus being configured to, through the at least one collection window, at least collect environmental data of the autonomous mobile robot in a traveling direction; and,
a second information acquisition apparatus, the second information acquisition apparatus being configured to at least collect position data of the autonomous mobile robot during traveling.

In one embodiment, the information acquisition module is disposed on a front side of the body.

In one embodiment, a front edge of the information acquisition module does not exceed a front edge of the body.

In one embodiment, a mounting height of the information acquisition module does not exceed the body.

In one embodiment, the mounting height of the information acquisition module in a vertical direction of the body is 0.5m-0.9m.

In one embodiment, the information acquisition module is removably connected to the body.

In one embodiment, the information acquisition module comprises an intermediate connector, the intermediate connector is connected to the body, and the first information acquisition apparatus and the second information acquisition apparatus are mounted on the intermediate connector.

In one embodiment, the intermediate connector comprises a fixing plate and a support plate, the support plate is connected to the fixing plate, the first information acquisition apparatus is configured to be mounted on at least one of the fixing plate and the support plate, the second information acquisition apparatus is configured to be mounted on the fixing plate, and the information acquisition module is connected to the body through the support plate.

In one embodiment, the autonomous mobile robot further comprises a control module, the control module is configured to, based on the environmental data collected by the first information acquisition apparatus and the position data collected by the second information acquisition apparatus, obtain localization information of the autonomous mobile robot.

In one embodiment, the first information acquisition apparatus comprises at least one of an image collection apparatus and a distance collection apparatus, the image collection apparatus is configured to at least collect image data of the autonomous mobile robot in the traveling direction, the distance collection apparatus is configured to at least collect data related to an obstacle of the autonomous mobile robot in the traveling direction.

In one embodiment, the image collection apparatus comprises a vision sensor, and the distance collection apparatus comprises a LiDAR sensor.

In one embodiment, the second information acquisition apparatus comprises an inertial sensor, the inertial sensor is configured to collect data related to a position and an orientation during traveling.

In one embodiment, the second information acquisition apparatus further comprises a satellite positioning sensor, the satellite positioning sensor is configured to collect localization data of the autonomous mobile robot during traveling.

In one embodiment, the control module is configured to, based on the environmental data collected by the first information acquisition apparatus, obtain obstacle information of the autonomous mobile robot in the traveling direction.

In one embodiment, the first information acquisition apparatus comprises an image collection apparatus and a distance collection apparatus, the image collection apparatus is configured to at least collect image data of the autonomous mobile robot in the traveling direction, the distance collection apparatus is configured to at least collect data related to an obstacle of the autonomous mobile robot in the traveling direction.

In one embodiment, the image collection apparatus comprises a vision sensor, and the distance collection apparatus comprises a LiDAR sensor.

In one embodiment, the information acquisition module comprises a first housing forming a first cavity and a second housing forming a second cavity and connected to the first housing, the first housing has a first collection window, the image collection apparatus is disposed in the first cavity and, through the first collection window, at least collects image data of the autonomous mobile robot in the traveling direction, the second housing has a second collection window, the distance collection apparatus is disposed in the second cavity and, through the second collection window, at least collects data related to an obstacle of the autonomous mobile robot in the traveling direction.

In one embodiment, the second acquisition apparatus is disposed in the first cavity, and the second cavity is located below the first cavity.

In one embodiment, the first information acquisition apparatus and the second information acquisition apparatus are disposed in a same cavity within the information acquisition module.

In one embodiment, a shielding layer is disposed between the second information acquisition apparatus and the first information acquisition apparatus to shield interference of the first information acquisition apparatus on the second information acquisition apparatus.

In one embodiment, the first information acquisition apparatus is symmetrically distributed along a central axis of the body.

In one embodiment, the second information acquisition apparatus in a vertical direction is not lower than the first information acquisition apparatus.

The present application provides an information acquisition module, the information acquisition module comprises:
a first information acquisition apparatus, having at least one collection window, the first information acquisition apparatus being configured to, through the at least one collection window, at least collect environmental data; and,
a second information acquisition apparatus, the second information acquisition apparatus being configured to at least collect position data.

In one embodiment, the information acquisition module comprises an intermediate connector, and the first information acquisition apparatus and the second information acquisition apparatus are mounted on the intermediate connector.

In one embodiment, the intermediate connector comprises a fixing plate and a support plate, the support plate is connected to the fixing plate, the first information acquisition apparatus is configured to be mounted on at least one of the fixing plate and the support plate, and the second information acquisition apparatus is configured to be mounted on the fixing plate.

In one embodiment, the first information acquisition apparatus comprises at least one of an image collection apparatus and a distance collection apparatus, the image collection apparatus is configured to at least collect image data, the distance collection apparatus is configured to at least collect data related to an obstacle.

In one embodiment, the image collection apparatus is a vision sensor, and the distance collection apparatus is a LiDAR sensor.

In one embodiment, the second information acquisition apparatus comprises an inertial sensor, the inertial sensor is configured to collect data related to a position and an orientation.

In one embodiment, the second information acquisition apparatus further comprises a satellite positioning sensor, the satellite positioning sensor is configured to collect localization data.

In one embodiment, the information acquisition module comprises a first housing forming a first cavity and a second housing forming a second cavity and connected to the first housing, the first housing has a first collection window, the image collection apparatus, through the first collection window, at least collects the image data, the second housing has a second collection window, the distance collection apparatus, through the second collection window, at least collects the data related to an obstacle.

In one embodiment, the second acquisition apparatus is disposed in the first cavity, and the second cavity is located below the first cavity.

In one embodiment, the first information acquisition apparatus and the second information acquisition apparatus are disposed in a same cavity within the information acquisition module.

In one embodiment, a shielding layer is disposed between the second information acquisition apparatus and the first information acquisition apparatus to shield interference of the first information acquisition apparatus on the second information acquisition apparatus.

In one embodiment, the first information acquisition apparatus is symmetrically distributed along a central axis of the body.

In one embodiment, the second information acquisition apparatus in a vertical direction is not lower than the first information acquisition apparatus.

The present application provides an autonomous mobile robot, the autonomous mobile robot comprises a body and an information acquisition module, the information acquisition module is connected to the body, and the information acquisition module comprises:
a first information acquisition apparatus, having at least one collection window, the first information acquisition apparatus being configured to, through the at least one collection window, at least collect environmental data of the autonomous mobile robot in a traveling direction; and,
a second information acquisition apparatus, the second information acquisition apparatus being configured to collect localization data of the autonomous mobile robot during traveling.

In one embodiment, the information acquisition module is disposed on a front side of the body.

In one embodiment, a front edge of the information acquisition module does not exceed a front edge of the body.

In one embodiment, a mounting height of the information acquisition module does not exceed the body.

In one embodiment, the mounting height of the information acquisition module in a vertical direction of the body is 0.5m-0.9m.

In one embodiment, the information acquisition module comprises an intermediate connector, the intermediate connector is connected to the body, and the first information acquisition apparatus and the second information acquisition apparatus are mounted on the intermediate connector.

In one embodiment, the intermediate connector comprises a fixing plate and a support plate, the support plate is connected to the fixing plate, the first information acquisition apparatus is configured to be mounted on the fixing plate and the support plate, the second information acquisition apparatus is configured to be mounted on the fixing plate, and the information acquisition module is connected to the body through the support plate.

In one embodiment, the first information acquisition apparatus comprises an image collection apparatus and/or a distance collection apparatus, the image collection apparatus is configured to at least collect image data of the autonomous mobile robot in the traveling direction, the distance collection apparatus is configured to at least collect obstacle distance data of the autonomous mobile robot in the traveling direction.

In one embodiment, the first information acquisition apparatus and the second information acquisition apparatus are disposed in a same cavity within the information acquisition module.

In one embodiment, the information acquisition module comprises a first cavity and a second cavity connected to the first cavity, the first cavity has a first collection window, the image collection apparatus collects image data of the autonomous mobile robot in the traveling direction through the third collection window, the second cavity has a second collection window, the distance collection apparatus obtains obstacle distance data of the autonomous mobile robot in the traveling direction through the fourth collection window.

In one embodiment, the second cavity is located below the first cavity.

In one embodiment, a shielding layer is disposed between the second information acquisition apparatus and the first information acquisition apparatus to shield interference of the first information acquisition apparatus on the second information acquisition apparatus.

In one embodiment, the first information acquisition apparatus is symmetrically distributed along a central axis of the body.

In one embodiment, the second information acquisition apparatus comprises an inertial sensor, the inertial sensor is configured to collect localization data related to a pose during traveling.

In one embodiment, the second information acquisition apparatus in a vertical direction is not lower than the first information acquisition apparatus.

The autonomous mobile robot of the present application comprises a body and an information acquisition module, the information acquisition module is connected to the body, and the information acquisition module comprises: a first information acquisition apparatus, having at least one collection window, the first information acquisition apparatus being configured to, through the at least one collection window, at least collect environmental data of the autonomous mobile robot in a traveling direction; and, a second information acquisition apparatus, the second information acquisition apparatus being configured to collect localization data of the autonomous mobile robot during traveling. In the autonomous mobile robot of the present application, at least two types of information acquisition apparatus are first installed in a same structure, and then the structure is connected to the body. Multiple information acquisition apparatus are installed in a same structure, and the structure is connected to the body as a removable whole, thereby facilitating production in a production stage, reducing whole machine installation steps, and allowing independent external parameter calibration apart from the body, while also facilitating later maintenance and improving work efficiency.

The autonomous mobile robot and information acquisition module of the present application install a first acquisition apparatus for acquiring environmental data and a second acquisition apparatus for acquiring position data in a same module, and an acquisition apparatus in the module may perform external parameter calibration independent of the body of the autonomous mobile robot. A structure required for calibration in the module is simple with low cost, and the module has strong versatility and may be installed on a various type of autonomous mobile robot, while reducing a calibration time when the acquisition apparatus is installed on the autonomous mobile robot, requiring only one calibration, thereby simplifying operation.

### BRIEF DESCRIPTION OF DRAWINGS

By reading the detailed description of the non-limiting embodiments with reference to the following drawings, other features, objects and advantages of the present disclosure will become more apparent:
FIG. 1 is a structural schematic diagram of an autonomous mobile robot according to one embodiment;
FIG. 2 is a front view of an information acquisition module according to one embodiment;
FIG. 3 is a top view of an information acquisition module according to one embodiment;
FIG. 4 is a cross-sectional view along line A1-A1 in FIG. 3.

### DETAILED DESCRIPTION

For the purpose of facilitating understanding of the present application, the present application will be described more comprehensively below with reference to relevant drawings. Preferred embodiments of the present application are shown in the drawings. However, the present application may be implemented in many different forms and is not limited to the embodiments described herein. On the contrary, these embodiments are provided for the purpose of making the disclosure of the present application more thorough and comprehensive.

Unless otherwise defined, all technical and scientific terms used herein have the same meaning as commonly understood by those skilled in the art to which the present application belongs. The terms used herein in the specification of the present application are only for the purpose of describing specific embodiments and are not intended to limit the present application. The term "and/or" used herein includes any and all combinations of one or more related listed items. In the present application, "each" includes one and two or more quantities.

In an existing autonomous mobile robot, a various type of information acquisition apparatus, that is, a various type of sensor, is independently installed on the body. This non-modular design layout has many installation steps, and a various type of information collection apparatus needs to be separately installed on the autonomous mobile robot before calibration can be performed. The calibration time is numerous and the calibration operation of the information collection apparatus relative to the autonomous mobile robot is relatively cumbersome, with a large workload, affecting production efficiency.

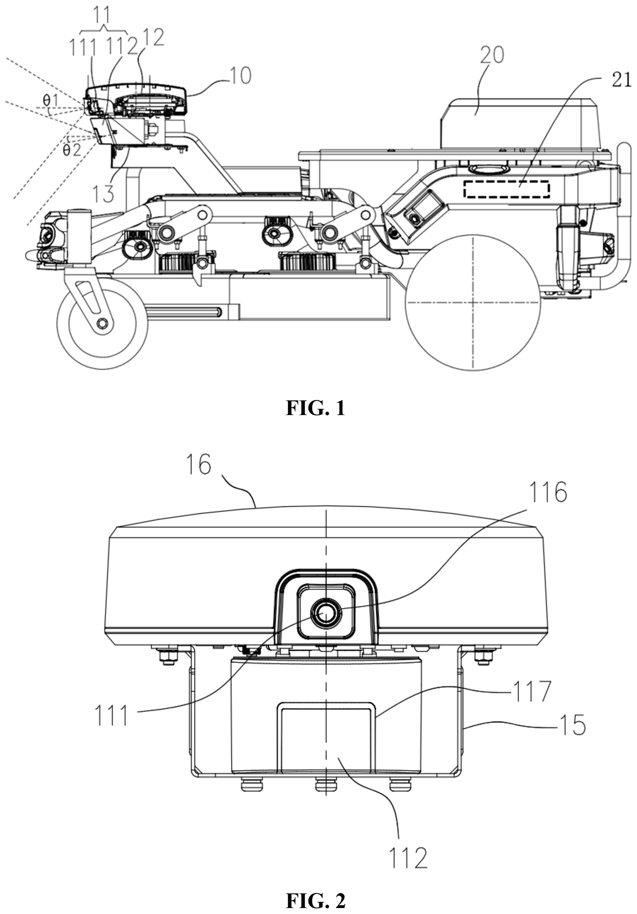

Referring to FIGS. 2 to 4, the present application relates to an information acquisition module 20, the information acquisition module 10 comprises a first information acquisition apparatus 11 and a second information acquisition apparatus 12. The first information acquisition apparatus 11 is configured to at least collect environmental data, and the second information acquisition apparatus 12 is configured to at least collect position data. Installing at least two types of information acquisition apparatus in a same structure facilitates installation thereof on an autonomous mobile robot, and allows independent external parameter calibration apart from a body of the autonomous mobile robot, reducing a calibration time relative to the body, reducing a calibration workload when installed on the body, and being beneficial to improving production efficiency. In addition, by disposing at least two types of information acquisition apparatus in a same information acquisition module 10 to form a modular structure, modular installation may be performed, making installation simpler, reducing whole machine installation steps, and meanwhile, a modular design is beneficial to designing a unified interface, improving versatility of the information acquisition module 10 among different apparatus, simplifying design, reducing production cost, and also facilitating later maintenance thereof and improving work efficiency.

The first information acquisition apparatus 11 has at least one collection window, and the first information acquisition apparatus 11 is configured to, through the at least one collection window, at least collect environmental data. The collection window is set according to at least one of an installation manner of the first information acquisition apparatus 11 in the information acquisition module 10 and a working requirement. When the first information acquisition apparatus 11 comprises two or more types of sensors, only one collection window may be set to correspond to one of the sensors, or all sensors correspond to a collection window, or each sensor collects data through a different region of a same collection window.

In one embodiment, the first information acquisition apparatus 11 comprises at least one of an image collection apparatus 111 and a distance collection apparatus 112, the image collection apparatus 111 is configured to at least collect image data as environmental data, and the distance collection apparatus 112 is configured to at least collect data related to an obstacle as environmental data, wherein the data related to an obstacle comprises at least obstacle distance data. The image collection apparatus 111 is, for example, a vision sensor, and the distance collection apparatus 112 is, for example, a LiDAR sensor. The vision sensor may also be a monocular sensor, a binocular sensor, or a depth sensor. In other embodiments, the first information acquisition apparatus 11 may also comprise only one binocular sensor or one depth sensor to simultaneously obtain image data and data including an obstacle distance. The distance collection apparatus 112 may also be a 3D-TOF or other sensor. Referring to FIG. 2, among the at least one collection window, there may be only a first collection window 116 corresponding to the image collection apparatus 111, with no opening set as a collection window at the distance collection apparatus 112, or there may also be a second collection window 117 corresponding to the distance collection apparatus 112, or the image collection apparatus 111 and the distance collection apparatus 112 may collect data through a different region of a same collection window. It should be noted that an obstacle in the distance collection apparatus 112 configured to at least collect data related to an obstacle as environmental data is defined as a task object that can be collected by the distance collection apparatus 112. For example, when the distance collection apparatus 112 is a LiDAR sensor, all objects that can reflect a laser beam are called an obstacle.

The second information acquisition apparatus 12 comprises an inertial sensor IMU, and the inertial sensor is configured to collect data related to a pose during traveling, wherein the pose comprises a position and an orientation. The second information acquisition apparatus 12 may also comprise an odometer, and the odometer is configured to collect position data related to a traveling distance during traveling. The localization data of the autonomous mobile robot during traveling comprises satellite localization data and/or indoor localization data based on a wireless communication technology (such as Wi-Fi, Bluetooth Low Energy BLE, ZigBee, Ultra-Wideband UWB, etc.). In one embodiment, the second information acquisition apparatus 12 may be a apparatus that uses RTK (Real-time kinematic) carrier phase differential technology for satellite positioning.

It should be noted that a sensor in the first information acquisition apparatus and a sensor in the second information acquisition apparatus of the information acquisition module have a various combination manner. For example, the first information acquisition apparatus comprises a vision sensor, and the second information acquisition apparatus comprises an inertial sensor; or the first information acquisition apparatus comprises a LiDAR sensor, and the second information acquisition apparatus comprises an inertial sensor; or the first information acquisition apparatus comprises a vision sensor, and the second information acquisition apparatus comprises a satellite positioning sensor; or the first information acquisition apparatus comprises a LiDAR sensor, and the second information acquisition apparatus comprises a satellite positioning sensor; or the first information acquisition apparatus comprises a vision sensor, and the second information acquisition apparatus comprises an inertial sensor and a satellite positioning sensor; or the first information acquisition apparatus comprises a LiDAR sensor, and the second information acquisition apparatus comprises an inertial sensor and a satellite positioning sensor; or the first information acquisition apparatus comprises a vision sensor and a LiDAR sensor, and the second information acquisition apparatus comprises an inertial sensor; or the first information acquisition apparatus comprises a vision sensor and a LiDAR sensor, and the second information acquisition apparatus comprises a satellite positioning sensor; or the first information acquisition apparatus comprises a vision sensor and a LiDAR sensor, and the second information acquisition apparatus comprises an inertial sensor and a satellite positioning sensor.

In one embodiment, the information acquisition module 10 comprises an intermediate connector, and the first information acquisition apparatus 11 and the second information acquisition apparatus 12 are mounted on the intermediate connector. After being mounted on the intermediate connector, they are mounted on the autonomous mobile robot through the intermediate connector. In this way, the information acquisition module 10 as a whole forms a modular structure through the connection of the intermediate connector and may be connected to the autonomous mobile robot as a removable whole. In a production process, production may be facilitated, whole machine installation steps may be reduced, calibration may be facilitated, and later maintenance thereof may also be facilitated, thereby improving work efficiency.

In actual implementation, there may be one or multiple intermediate connectors. When there is one intermediate connector, both the first information acquisition apparatus 11 and the second information acquisition apparatus 12 are mounted on a same intermediate connector and then connected to the autonomous mobile robot as a whole through the intermediate connector. When there are multiple intermediate connectors, the intermediate connectors are first assembled according to an arrangement manner of the first information acquisition apparatus 11 and the second information acquisition apparatus 12 to form a modular structure, and then connected to the autonomous mobile robot as a whole. In a process of assembling the intermediate connectors, the intermediate connectors may be used to construct one or multiple cavities for accommodating the first information acquisition apparatus 11 and the second information acquisition apparatus 12 to meet a usage requirement of an information acquisition apparatus that needs protection or interference prevention.

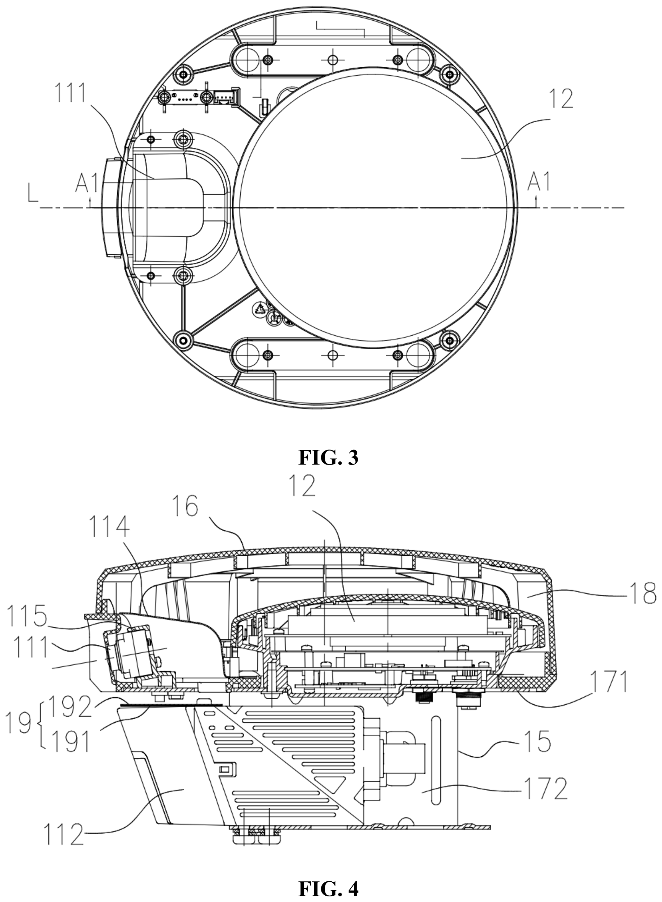

In one embodiment, when the first information acquisition apparatus 11 comprises an image collection apparatus 111 and a distance collection apparatus 112, referring to FIG. 3 and FIG. 4, the intermediate connector comprises a fixing plate 171 and a support plate 15. The image collection apparatus 111 and the second information acquisition apparatus 12 are configured to be mounted on the fixing plate 171, the distance collection apparatus 112 is configured to be mounted on the support plate 15, and the support plate 15 is connected to the fixing plate 171. Thus, the image collection apparatus 111, the distance collection apparatus 112, the second information acquisition apparatus 12, the support plate 15, and the fixing plate 171 form a whole, which is then connected to the autonomous mobile robot through the support plate 15, thereby realizing the information acquisition module 10 being connected to the autonomous mobile robot as a removable whole, and a modular assembly between the first information acquisition apparatus 11 and the second information acquisition apparatus 12. By adopting this manner, the image collection apparatus 111, the distance collection apparatus 112, and the second information acquisition apparatus 12 may be flexibly arranged, while reducing the influence of heat generated during operation of the distance collection apparatus 112 on the image collection apparatus 111 and the second information acquisition apparatus 12, ensuring normal operation of the information acquisition module 10. When the first information acquisition apparatus 11 comprises only the image collection apparatus 111 or the distance collection apparatus 112, the first information acquisition apparatus 11 and the second information acquisition apparatus 12 may be disposed on the fixing plate 171, or one may be disposed on the fixing plate 171 and the other may be disposed on the support plate 15.

The information acquisition module 10 comprises a first housing forming a first cavity 18. The first housing comprises a cover 16 and the aforementioned fixing plate 171. The cover 16 and the fixing plate 171 form the first cavity 18 therebetween for accommodating the image collection apparatus 111 and the second information acquisition apparatus 12. The first housing has a first collection window 116, and the first collection window 116 is disposed at a front of the first housing, the front being a direction where a front end of the autonomous mobile robot is located when the information acquisition module 10 is mounted on the autonomous mobile robot. In the first cavity 18, the image collection apparatus 111 is disposed in front of the second information acquisition apparatus 12 and collects data through the first collection window 116. The information acquisition module 10 further comprises a second housing connected to the first housing. The second housing comprises the aforementioned support plate 15 and the fixing plate 171. The support plate 15 and the fixing plate 171 form a second cavity 172 therebetween for accommodating the distance collection apparatus 112. The second housing has a second collection window 117. The distance collection apparatus 112 is disposed in the second cavity and collects data related to an obstacle of the autonomous mobile robot in the traveling direction through the second collection window 117. Similarly, when the first information acquisition apparatus 11 comprises only the image collection apparatus 111 or the distance collection apparatus 112, the information acquisition module 10 may be provided with only one cavity, and the first information acquisition apparatus 11 and the second information acquisition apparatus 12 are disposed in a same cavity. The information acquisition module 10 may also be provided with two cavities, and the first information acquisition apparatus 11 and the second information acquisition apparatus 12 are respectively disposed in the two cavities.

In one embodiment, the second information acquisition apparatus 12 is disposed in the first cavity 18. The second information acquisition apparatus 12 comprises a satellite positioning sensor. To ensure normal use of the satellite positioning sensor in the second information acquisition apparatus 12, the second information acquisition apparatus 12 in a vertical direction is not lower than the first information acquisition apparatus 11, so as to meet the condition that the surroundings of the second information acquisition apparatus 12 are open and unobstructed. In this regard, the first cavity 18 is configured to be located above the second cavity 172, so that the surroundings of the second information acquisition apparatus 12 are open and unobstructed.

When the first information acquisition apparatus 11 comprises an image collection apparatus 111 and a distance collection apparatus 112, the image collection apparatus 111 and the distance collection apparatus 112 are arranged in an upper and lower manner, so as to be able to at least collect environmental data of the autonomous mobile robot in the traveling direction, while ensuring a maximum field of view and a preferred field of view overlap range between the image collection apparatus 111 and the distance collection apparatus 112. In the embodiment of the present application, both the image collection apparatus 111 and the distance collection apparatus 112 may be configured to be symmetrically disposed along a central axis of the information acquisition module 10, thereby ensuring that they have a preferred field of view overlap range. Installing the information acquisition module 10 in two cavities facilitates the upper and lower arrangement of the image collection apparatus 111 and the distance collection apparatus 112, while reducing the signal influence of the distance collection apparatus 112 on the second information acquisition apparatus 12.

In one embodiment, the first information acquisition apparatus 11 and the second information acquisition apparatus 12 may also be disposed in a same cavity within the information acquisition module 10. The cavity has a first collection window 116 corresponding to the image collection apparatus 111, and a second collection window 117 corresponding to the distance collection apparatus 112 is disposed below the first collection window 116. Thus, the image collection apparatus 111 and the distance collection apparatus 112 are arranged in an upper and lower manner, so as to be able to at least collect environmental data of the autonomous mobile robot in the traveling direction, while ensuring a maximum field of view and a preferred field of view overlap range between the image collection apparatus 111 and the distance collection apparatus 112.

It can be understood that the arrangement manner of the image collection apparatus 111, the distance collection apparatus 112, and the second information acquisition apparatus 12 is not limited to the above embodiments. The three apparatus may be arranged flush, or two of them may be above the other one, or two of them may be flush and the other one may be slightly higher, etc. They may have no obstruction between each other, or may have partial obstruction, as long as they can receive a signal and achieve data collection.

It should be noted that the image collection apparatus 111 of the first information acquisition apparatus 11 comprises a vision sensor, the distance collection apparatus 112 of the first information acquisition apparatus 11 comprises a LiDAR sensor, and the second information acquisition apparatus 12 comprises a satellite positioning sensor. The vision sensor or the LiDAR sensor may generate signal interference to the satellite positioning sensor. In one embodiment, to ensure normal operation of the information acquisition module 10, a shielding layer is disposed between the second information acquisition apparatus 12 and the first information acquisition apparatus 11 to shield interference of the first information acquisition apparatus 11 on the second information acquisition apparatus 12, that is, to shield signal interference of the vision sensor and the LiDAR sensor on the RKT. Continuing to refer to FIG. 4, a first shielding layer 114 is disposed between the image collection apparatus 111 and the second information acquisition apparatus 12. The image collection apparatus 111 is mounted on the fixing plate 171 through a mounting seat 115. The mounting seat 115 is provided with the first collection window 116. The first shielding layer 114 is disposed around the image collection apparatus 111 to separate a space corresponding to the image collection apparatus 111 from the first cavity 18, so as to shield signal interference of the image collection apparatus 111 on the second information acquisition apparatus 12. The first shielding layer 114 may use Q235 ordinary carbon structural steel. A highest point of the first shielding layer 114 is lower than an antenna of the second information acquisition apparatus 12, so that the upper part of the second information acquisition apparatus 12 is unobstructed.

A second shielding layer 19 is disposed between the distance collection apparatus 112 and the second information acquisition apparatus 12 to shield signal interference of the distance collection apparatus 112 on the second information acquisition apparatus 12. The second shielding layer 19 is located in a non-signal transmission and reception area of the distance collection apparatus 112 to avoid affecting normal operation of the distance collection apparatus 112. In one embodiment, the second shielding layer 19 may comprise a shielding paper 191 and a shielding plate 192. The shielding paper 191 is disposed in the non-signal transmission and reception area on an upper side of the distance collection apparatus 112 and extends between the distance collection apparatus 112 and the second information acquisition apparatus 12. The shielding plate 192 is pressed above the shielding paper 191 to fix the shielding paper 191 while enhancing a shielding effect. The shielding paper 191 may use a tin foil material, and the shielding plate 192 may use a 06Cr19Ni10 stainless steel material.

In one embodiment, in the information acquisition module 10, a relative position between the first information acquisition apparatus 11 and the second information acquisition apparatus 12 is fixed. When the information acquisition module 10 is mounted on the autonomous mobile robot, the relative position between the information acquisition module 10 and the autonomous mobile robot is fixed. In this way, independent calibration of the information acquisition module 10 may replace a calibration performed by mounting each information acquisition apparatus on the autonomous mobile robot in a traditional manner.

Specifically, during a calibration, the information acquisition module 10 is held by a robotic arm to simulate a walking process of the autonomous mobile robot, the robotic arm is controlled to swing to simulate data collected by the inertial sensor in an actual road condition, so that it outputs a pose parameter with a various possibility, and then the information acquisition apparatus in the information acquisition module 10 is calibrated based on the pose parameter to fit a coordinate transformation result between the information acquisition apparatus. The coordinate transformation during the calibration process is known to those skilled in the art and will not be described in detail here. Compared with a traditional manner, this independent calibration is simpler and more convenient and the obtained result is richer.

This embodiment discloses an autonomous mobile robot in which at least two types of information acquisition apparatus are first installed in a same structure, and then the structure is connected to a body, thereby facilitating production in a production stage, reducing whole machine installation steps, allowing independent external parameter calibration apart from the body, reducing a calibration time relative to the body, and also facilitating later maintenance thereof and improving work efficiency. The autonomous mobile robot may be an intelligent lawn mower such as a household lawn mower and a commercial lawn mower, an unmanned aerial vehicle, an unmanned boat, an unmanned sweeping vehicle and other outdoor operation equipment, and may also be an indoor operation equipment such as a robotic vacuum cleaner.

FIG. 1 is a structural schematic diagram of an autonomous mobile robot according to one embodiment. As shown in FIG. 1, the autonomous mobile robot of this embodiment comprises an information acquisition module 10 and a body 20. The information acquisition module 10 is connected to the body 20, and the information acquisition module 10 comprises a first information acquisition apparatus 11 and a second information acquisition apparatus 12. The first information acquisition apparatus 11 is configured to at least collect environmental data of the autonomous mobile robot in a traveling direction, and the second information acquisition apparatus 12 is configured to collect position data of the autonomous mobile robot during traveling.

The information acquisition module 10 in this embodiment is completely the same as the information acquisition module 10 in the above embodiment, that is, the information acquisition module 10 in the above embodiment is mounted on the body of the autonomous mobile robot. The first information acquisition apparatus 11 has at least one collection window, and the first information acquisition apparatus 11 is configured to, through the at least one collection window, at least collect environmental data of the autonomous mobile robot in the traveling direction. The first information acquisition apparatus 11 comprises at least one of an image collection apparatus 111 and a distance collection apparatus 112. The image collection apparatus 111 is configured to at least collect image data of the autonomous mobile robot in the traveling direction as environmental data, and the distance collection apparatus 112 is configured to at least collect data related to an obstacle of the autonomous mobile robot in the traveling direction as environmental data. The image collection apparatus 111 is, for example, a vision sensor, and the distance collection apparatus 112 is, for example, a LiDAR sensor. The number and type of a sensor of the first information acquisition apparatus 11 will not be described in detail here.

The second information acquisition apparatus 12 comprises an inertial sensor IMU, and the inertial sensor is configured to collect data related to a pose during traveling, wherein the pose comprises a position and an orientation. The second information acquisition apparatus 12 may also comprise an odometer, and the odometer is configured to collect position data related to a traveling distance during traveling. The second information acquisition apparatus 12 further comprises a satellite positioning sensor, and the satellite positioning sensor is configured to collect localization data of the autonomous mobile robot during traveling. The localization data of the autonomous mobile robot during traveling comprises satellite localization data and/or indoor localization data based on a wireless communication technology (such as Wi-Fi, Bluetooth Low Energy BLE, ZigBee, Ultra-Wideband UWB, etc.). In one embodiment, the second information acquisition apparatus 12 may be a apparatus that uses RTK (Real-time kinematic) carrier phase differential technology for satellite positioning.

The present application disposes at least two types of information acquisition apparatus in a same information acquisition module 10 to form a modular structure, which is then connected to the body 20 as a whole. Thus, the information acquisition apparatus in the information acquisition module 10 may perform overall calibration independent of the body 20, reducing a calibration workload and being beneficial to improving production efficiency. In addition, by disposing at least two types of information acquisition apparatus in a same information acquisition module 10 to form a modular structure, modular installation may be performed, making installation simpler, reducing whole machine installation steps, and meanwhile, a modular design is beneficial to designing a unified interface, improving versatility of the information acquisition module 10 among different apparatus, simplifying design, reducing production cost, and also facilitating later maintenance thereof and improving work efficiency.

The specific structure of the information acquisition module 10 has been described above and will not be repeated here. Continuing to refer to FIG. 1, the information acquisition module 10 is disposed on a front side of the body 20 to collect environmental data on the front side of the body 20. A front edge of the information acquisition module 10 does not exceed a front edge of the body 20, thereby avoiding a collision between the information acquisition module 10 and another object during traveling of the autonomous mobile robot. When the information acquisition module 10 is disposed on the front side of the body 20, under the condition of satisfying a required data collection range, a mounting height of the information acquisition module 10 does not exceed the body 20 or is slightly higher than the body 20, which may make an overall structure of the autonomous mobile robot more aesthetically pleasing and compact. In one embodiment, the mounting height of the information acquisition module 10 in a vertical direction of the body 20 is 0.5m-0.9m. The installation position and angle of the information acquisition module 10 meet the following requirements:
The first information acquisition apparatus is capable of detecting an obstacle at a distance of 1.3 meters from the body with a height of not less than 350mm;
The first information acquisition apparatus is capable of detecting an obstacle at a distance of 0.8 meters from the body with a height of not less than 810mm;
A detection blind zone on a working plane where the autonomous mobile robot is located is less than or equal to 800mm;
A width of the detection blind zone at a preset distance in front of the body is greater than or equal to a width of the body.

A detection blind zone is an area where the first information acquisition apparatus 11 cannot collect environmental data. A field of view in a vertical direction of the information acquisition module 10 is limited. Under the condition of ensuring a height of an obstacle that can be detected, the detection blind zone should be as small as possible. The detection blind zone being less than or equal to 800mm means that on a working plane where the autonomous mobile robot is located, a distance between a front edge of the body 20 of the autonomous mobile robot and a farthest boundary of the detection blind zone is less than or equal to 800mm. The preset distance is preferably 0.5m, thereby ensuring safety during traveling of the body 20.

A field of view of the first information acquisition apparatus 11 in a width direction of the body 20 should be as large as possible. Corresponding to a scenario where the first information acquisition apparatus 11 comprises at least one sensor, if at least two sensors work together, the at least two sensors need to have a maximum field of view overlap range. In the embodiment of the present application, both the image collection apparatus 111 and the distance collection apparatus 112 may be configured to be symmetrically disposed along a central axis L of the body 20 (referring to FIG. 3), thereby ensuring that they have a preferred field of view overlap range. In addition, the image collection apparatus 111 and the distance collection apparatus 112 are installed in a horizontal view or downward view manner to reduce a sunlight incident influence. During a horizontal view installation, a central axis of the image collection apparatus 111 and a central axis of the distance collection apparatus 112 are parallel to a horizontal plane. During a downward view installation, as shown in FIG. 1, the central axis of the image collection apparatus 111 and the central axis of the distance collection apparatus 112 are slightly inclined toward the ground, wherein a central axis of the image collection apparatus 111 forms an angle θ1 with the horizontal plane, and a central axis of the distance collection apparatus 112 forms an angle θ2 with the horizontal plane. To avoid an interference with a detection result, both the image collection apparatus 111 and the distance collection apparatus 112 are configured to be unable to detect the body 20 or only able to detect a small part of the body 20. It should be noted that when the first information acquisition apparatus 11 is configured to be able to adjust a rotation angle, the first information acquisition apparatus 11 may also be used to collect environmental data behind or on a side of the autonomous mobile robot.

The first information acquisition apparatus 11 and the second information acquisition apparatus 12 are mounted within the information acquisition module 10 with a relatively fixed position therebetween, and an independent external parameter calibration apart from the body 20 is performed. Then the information acquisition module 10 is mounted on the body 20 of the autonomous mobile robot, and one calibration relative to the body 20 is performed. Referring to FIG. 1, the autonomous mobile robot further comprises a control module 21 disposed in the body 20. The information acquisition module 10 is mounted on the body 20 of the autonomous mobile robot. The control module 21 is configured to, based on environmental data collected by the first information acquisition apparatus 11 and position data collected by the second information acquisition apparatus 12, obtain localization information of the autonomous mobile robot. Meanwhile, the control module 21 is configured to, based on the environmental data collected by the first information acquisition apparatus 11, obtain obstacle information of the autonomous mobile robot in the traveling direction. A method for the control module 21 to obtain localization information based on environmental data and position data, and to obtain obstacle information based on environmental data is an existing technology and will not be described in detail here.

In one embodiment, the first information acquisition apparatus 11 comprises an image collection apparatus 111, the image collection apparatus 111 comprises a vision sensor, and the second information acquisition apparatus 12 comprises an inertial sensor and a satellite positioning sensor. The vision sensor, the inertial sensor, and the satellite positioning sensor undergo an external parameter calibration and are transformed to a unified spatiotemporal coordinate system. The information acquisition module 10 is mounted on the body 20 of the autonomous mobile robot. The control module 21 is configured to, based on environmental data collected by the vision sensor, position data collected by the inertial sensor, and localization data collected by the satellite positioning sensor, obtain localization information of the autonomous mobile robot, thereby achieving precise positioning. When the autonomous mobile robot is obstructed and a satellite positioning signal is weak, a positioning is performed using localization data fused from the vision sensor and the inertial sensor. Under a condition with insufficient light such as a cloudy day, a positioning is performed using localization data from a satellite positioning, thereby ensuring that the autonomous mobile robot can navigate precisely even when moving outdoors.

In one embodiment, the first information acquisition apparatus 11 comprises a distance collection apparatus 112, the distance collection apparatus 112 comprises a LiDAR sensor, and the second information acquisition apparatus 12 comprises an inertial sensor and a satellite positioning sensor. The LiDAR sensor, the inertial sensor, and the satellite positioning sensor undergo an external parameter calibration and are transformed to a unified spatiotemporal coordinate system. The information acquisition module 10 is mounted on the body 20 of the autonomous mobile robot. The control module 21 is configured to, based on environmental data collected by the LiDAR sensor, position data collected by the inertial sensor, and localization data collected by the satellite positioning sensor, obtain localization information of the autonomous mobile robot, thereby achieving precise positioning. When the autonomous mobile robot is obstructed and a satellite positioning signal is weak, a positioning is performed using localization data fused from the LiDAR sensor and the inertial sensor. In a harsh environment, a positioning is performed using localization data from a satellite positioning, thereby ensuring that the autonomous mobile robot can navigate precisely even when moving outdoors.

In one embodiment, the first information acquisition apparatus 11 comprises an image collection apparatus 111 and a distance collection apparatus 112, the image collection apparatus 111 comprises a vision sensor, the distance collection apparatus 112 comprises a LiDAR sensor, and the second information acquisition apparatus 12 comprises an inertial sensor and a satellite positioning sensor. The vision sensor, the LiDAR sensor, the inertial sensor, and the satellite positioning sensor undergo an external parameter calibration and are transformed to a unified spatiotemporal coordinate system. The information acquisition module 10 is mounted on the body 20 of the autonomous mobile robot. The control module 21 is configured to, based on environmental data collected by at least one of the vision sensor and the LiDAR sensor, position data collected by the inertial sensor, and localization data collected by the satellite positioning sensor, obtain localization information of the autonomous mobile robot, thereby achieving precise positioning. When the autonomous mobile robot is obstructed and a satellite positioning signal is weak, a positioning is performed using localization data fused from at least one of the vision sensor and the LiDAR sensor, and the inertial sensor. In a harsh environment, a positioning is performed using localization data from a satellite positioning, thereby ensuring that the autonomous mobile robot can navigate precisely even when moving outdoors. Meanwhile, the control module is configured to, based on environmental data collected by the vision sensor and the LiDAR sensor, obtain obstacle information of the autonomous mobile robot in the traveling direction. When the vision sensor is a monocular sensor, the obtained image data has no distance information, and environmental data obtained by the LiDAR sensor has no image information. By fusing a calibration of the two sensors, an obstacle information may be accurately acquired to enable the autonomous mobile robot to achieve precise obstacle avoidance.

As shown in FIG. 1, to avoid a situation where the autonomous mobile robot becomes conductive and causes the information acquisition module 10 to conduct electricity and be damaged, an insulation layer 13 is further disposed between the information acquisition module 10 and the autonomous mobile robot. Specifically, the insulation layer 13 may be disposed between the intermediate connector and the body 20 of the autonomous mobile robot. The first information acquisition apparatus 11 and the second information acquisition apparatus 12 are disposed within the first housing or the second housing, which also facilitates an insulation arrangement between them and the body 20.

The present application first disposes at least two types of information acquisition apparatus in a same structure to form a modular structure, and then connects the structure to the body as a whole. Thus, the information acquisition module 10 may perform an overall calibration independent of the body, reducing a calibration workload and being beneficial to improving production efficiency. In addition, an installation is simpler, beneficial to designing a unified interface, improving versatility of the information acquisition module among different apparatus, simplifying design, and reducing production cost. Meanwhile, whole machine installation steps are reduced, and later maintenance thereof is also facilitated, thereby improving work efficiency.

The above-described embodiments only express several implementation manners of the present application, and their descriptions are relatively specific and detailed, but should not be understood as limitations on the scope of the patent application. It should be pointed out that for those of ordinary skill in the art, several variations and improvements may also be made without departing from the concept of the present application, all of which belong to the protection scope of the present application. Therefore, the protection scope of the patent application should be subject to the appended claims.

## Claims

1. An autonomous mobile robot, wherein the autonomous mobile robot comprises a body and an information acquisition module, the information acquisition module is connected to the body, and the information acquisition module comprises:
a first information acquisition apparatus, having at least one collection window, the first information acquisition apparatus being configured to, through the at least one collection window, at least collect environmental data of the autonomous mobile robot in a traveling direction; and,
a second information acquisition apparatus, the second information acquisition apparatus being configured to at least collect position data of the autonomous mobile robot during traveling.

2. The autonomous mobile robot according to claim 1, wherein the information acquisition module is disposed on a front side of the body.

3. The autonomous mobile robot according to claim 1, wherein a front edge of the information acquisition module does not exceed a front edge of the body.

4. The autonomous mobile robot according to claim 1, wherein a mounting height of the information acquisition module does not exceed the body.

5. The autonomous mobile robot according to claim 4, wherein the mounting height of the information acquisition module in a vertical direction of the body is 0.5m-0.9m.

6. The autonomous mobile robot according to claim 1, wherein the information acquisition module is removably connected to the body.

7. The autonomous mobile robot according to claim 1, wherein the information acquisition module comprises an intermediate connector, the intermediate connector is connected to the body, and the first information acquisition apparatus and the second information acquisition apparatus are mounted on the intermediate connector.

8. The autonomous mobile robot according to claim 7, wherein the intermediate connector comprises a fixing plate and a support plate, the support plate is connected to the fixing plate, the first information acquisition apparatus is configured to be mounted on at least one of the fixing plate and the support plate, the second information acquisition apparatus is configured to be mounted on the fixing plate, and the information acquisition module is connected to the body through the support plate.

9. The autonomous mobile robot according to any one of claims 1 to 8, wherein the autonomous mobile robot further comprises a control module, the control module is configured to, based on the environmental data collected by the first information acquisition apparatus and the position data collected by the second information acquisition apparatus, obtain localization information of the autonomous mobile robot.

10. The autonomous mobile robot according to claim 9, wherein the first information acquisition apparatus comprises at least one of an image collection apparatus and a distance collection apparatus, the image collection apparatus is configured to at least collect image data of the autonomous mobile robot in the traveling direction, the distance collection apparatus is configured to at least collect data related to an obstacle of the autonomous mobile robot in the traveling direction.

11. The autonomous mobile robot according to claim 10, wherein the image collection apparatus comprises a vision sensor, and the distance collection apparatus comprises a LiDAR sensor.

12. The autonomous mobile robot according to claim 9 or 10, wherein the second information acquisition apparatus comprises an inertial sensor.

13. The autonomous mobile robot according to claim 9 or 10 or 12, wherein the second information acquisition apparatus further comprises a satellite positioning sensor, the satellite positioning sensor is configured to collect localization data of the autonomous mobile robot during traveling.

14. The autonomous mobile robot according to claim 9, wherein the control module is configured to, based on the environmental data collected by the first information acquisition apparatus, obtain obstacle information of the autonomous mobile robot in the traveling direction.

15. The autonomous mobile robot according to claim 14, wherein the first information acquisition apparatus comprises an image collection apparatus and a distance collection apparatus, the image collection apparatus is configured to at least collect image data of the autonomous mobile robot in the traveling direction, the distance collection apparatus is configured to at least collect data related to an obstacle of the autonomous mobile robot in the traveling direction.

16. The autonomous mobile robot according to claim 15, wherein the image collection apparatus comprises a vision sensor, and the distance collection apparatus comprises a LiDAR sensor.

17. The autonomous mobile robot according to claim 15, wherein the information acquisition module comprises a first housing forming a first cavity and a second housing forming a second cavity and connected to the first housing, the first housing has a first collection window, the image collection apparatus is disposed in the first cavity and, through the first collection window, at least collects image data of the autonomous mobile robot in the traveling direction, the second housing has a second collection window, the distance collection apparatus is disposed in the second cavity and, through the second collection window, at least collects data related to an obstacle of the autonomous mobile robot in the traveling direction.

18. The autonomous mobile robot according to claim 17, wherein the second acquisition apparatus is disposed in the first cavity, and the second cavity is located below the first cavity.

19. The autonomous mobile robot according to claim 1, wherein the first information acquisition apparatus and the second information acquisition apparatus are disposed in a same cavity within the information acquisition module.

20. The autonomous mobile robot according to claim 1, wherein a shielding layer is disposed between the second information acquisition apparatus and the first information acquisition apparatus to shield interference of the first information acquisition apparatus on the second information acquisition apparatus.

21. The autonomous mobile robot according to claim 1, wherein the first information acquisition apparatus is symmetrically distributed along a central axis of the body.

22. The autonomous mobile robot according to claim 1, wherein the second information acquisition apparatus in a vertical direction is not lower than the first information acquisition apparatus.

23. An information acquisition module, wherein the information acquisition module comprises:
a first information acquisition apparatus, having at least one collection window, the first information acquisition apparatus being configured to, through the at least one collection window, at least collect environmental data; and,
a second information acquisition apparatus, the second information acquisition apparatus being configured to at least collect position data.

24. The information acquisition module according to claim 23, wherein the information acquisition module comprises an intermediate connector, and the first information acquisition apparatus and the second information acquisition apparatus are mounted on the intermediate connector.

25. The information acquisition module according to claim 24, wherein the intermediate connector comprises a fixing plate and a support plate, the support plate is connected to the fixing plate, the first information acquisition apparatus is configured to be mounted on at least one of the fixing plate and the support plate, and the second information acquisition apparatus is configured to be mounted on the fixing plate.

26. The information acquisition module according to claim 23, wherein the first information acquisition apparatus comprises at least one of an image collection apparatus and a distance collection apparatus, the image collection apparatus is configured to at least collect image data, the distance collection apparatus is configured to at least collect data related to an obstacle.

27. The information acquisition module according to claim 26, wherein the image collection apparatus is a vision sensor, and the distance collection apparatus is a LiDAR sensor.

28. The information acquisition module according to claim 23 or 26, wherein the second information acquisition apparatus comprises an inertial sensor, the inertial sensor is configured to collect data related to position and orientation.

29. The information acquisition module according to claim 23 or 26 or 28, wherein the second information acquisition apparatus further comprises a satellite positioning sensor, the satellite positioning sensor is configured to collect localization data.

30. The information acquisition module according to claim 26, wherein the information acquisition module comprises a first housing forming a first cavity and a second housing forming a second cavity and connected to the first housing, the first housing has a first collection window, the image collection apparatus, through the first collection window, at least collects the image data, the second housing has a second collection window, the distance collection apparatus, through the second collection window, at least collects the data related to an obstacle.

31. The information acquisition module according to claim 30, wherein the second acquisition apparatus is disposed in the first cavity, and the second cavity is located below the first cavity.

32. The information acquisition module according to claim 23, wherein the first information acquisition apparatus and the second information acquisition apparatus are disposed in a same cavity within the information acquisition module.

33. The information acquisition module according to claim 23, wherein a shielding layer is disposed between the second information acquisition apparatus and the first information acquisition apparatus to shield interference of the first information acquisition apparatus on the second information acquisition apparatus.

34. The information acquisition module according to claim 23, wherein the first information acquisition apparatus is symmetrically distributed along a central axis of the body.

35. The information acquisition module according to claim 23, wherein the second information acquisition apparatus in a vertical direction is not lower than the first information acquisition apparatus.
